# EUROPÄISCHE PATENTANMELDUNG

(11) **EP 4 455 524 A1**
(43) Veröffentlichungstag der Anmeldung: **30.10.2024**
(21) Anmeldenummer: 24172274.3
(22) Anmeldetag: 24.04.2024
(51) Int. Cl.: F16K 41/08, F16K 31/56, F16K 31/524

(54) **VENTIL FÜR SANITÄRARMATUR**

(30) Priorität: 25.04.2023 DE 202023102183 U
(71) Anmelder: Neoperl GmbH, 79379 Müllheim (DE)
(72) Erfinder: Fangmeier, Martin, 79424 Auggen (DE); Hauth, Matthias, 79674 Todtnau/Muggenbrunn (DE); Bian, Yichao, 79379 Müllheim (DE)
(74) Vertreter: Mertzlufft-Paufler, Cornelius

(57) **Zusammenfassung**

Es ist ein Ventil (1) offenbart, insbesondere für eine Sanitärarmatur, mit einem Ventilgehäuse (3) mit einem Ventilstößel (4) und einer Dichtung (5), dadurch gekennzeichnet, dass die Dichtung (5) vom Ventilstößel (4) und/oder einem Gehäuseteil (6) begrenzt wird und mit diesem mindestens eine Kammer (7) umschließt (Fig. 1).

## Beschreibung

Die Erfindung betrifft ein Ventil, insbesondere für eine Sanitärarmatur, mit einem Ventilgehäuse mit einem Ventilstößel und einer Dichtung.

Es sind Ventile für Sanitärarmaturen, insbesondere in Umstellern bei Dusch- und Badewannenarmaturen, bekannt, deren Funktion es ist einen Wasserfluss von einer Wannenposition auf einen Duschposition oder umgekehrt, umzustellen. Um beispielsweise von der Wannenposition in die Duschposition zu gelangen, wird eine Umstellerachse gezogen oder gedrückt, wodurch der Wasserfluss umgelenkt wird. Nach Abstellen des Wassers soll die Umstellerachse häufig selbständig in die Ausgangsposition zurückkehren. Alternativ kann die Ausgangsposition auch durch ein Drücken der Umstellerachse, wie bei einer Kugelschreibermechanik, erreicht werden. Ein Problem bei bekannten Ventilen ist, dass die normativ geforderte Zahl an Umstellzyklen nicht erreicht wird, da das Umstellen vor deren Erreichen nicht mehr leichtgängig funktioniert.

Die Erfindung beschäftigt sich damit, Ventile, insbesondere für Sanitärarmaturen, zu verbessern.

Diese Aufgabe wird durch die Merkmale des Anspruchs 1 erfindungsgemäß gelöst.

Das erfindungsgemäße Ventil ist demnach insbesondere dadurch gekennzeichnet, dass die Dichtung vom Ventilstößel begrenzt wird und mit diesem mindestens eine Kammer umschließt. Die hierdurch entstehende Kammer liegt direkt am Ventilstößel an und kann beispielsweise als Aufnahmeraum für Stoffe wie Schmierstoffe dienen. Ein weiterer oder alternativer Vorteil kann darin liegen, dass der Schmierstoff direkt aus der Kammer auf den Ventilstößel aufgetragen werden kann.

Das erfindungsgemäße Ventil ist demnach alternativ oder zusätzlich insbesondere dadurch gekennzeichnet, dass die Dichtung von einem Gehäuseteil begrenzt wird und mit diesem mindestens eine Kammer umschließt. Die hierdurch entstehende Kammer kann eine Verbindung zu einem anderen Teil des Gehäuses haben, wodurch ein Zugang zu der Kammer erreicht werden kann. Ein weiterer oder alternativer Vorteil kann darin liegen, dass ein Teil der Kammer am Gehäuseteil ausgebildet ist und sich die Kammer einfach vor einer Montage des Ventilstößels mit einem Schmierstoff befüllbar ist.

Bei einer vorteilhaften Ausgestaltung ist vorgesehen, dass die Kammer als ein Schmierstoffreservoir ausgebildet ist. Hierdurch kann beispielsweise erreichbar sein, dass die Kammer mit einem Schmierstoff wie Öl oder Fett befüllt werden kann. Dies hat eine Schmierung zwischen Dichtungslippe und Ventilstößel zur Folge. Der Ventilstößel lässt sich hierdurch dauerhaft leichtgängig bewegen. Ein übliches "Festfressen" von Ventilstößel und Dichtung kann vermieden werden.

Bei einer vorteilhaften Ausgestaltung ist vorgesehen, dass die Dichtung mit Vorspannung an den Ventilstößel gepresst ist. Hierdurch kann beispielsweise erreichbar sein, dass die Dichtung dichtend am Ventilstößel anliegt. Auch kann hierdurch beispielsweise erreichbar sein, dass ein sich in der Kammer befindlicher Schmierstoff nicht aus der Kammer herausfließen kann. Weiter ist es vorteilhaft, dass die Dichtung gegen einen unerwünschten Wasseraustritt abdichtet.

Bei einer vorteilhaften Ausgestaltung ist vorgesehen, dass die Dichtung mit dem Ventilstößel eine einem durch das Ventil schaltbaren Fluid, beispielsweise Wasser, zugewandte Kammer umschließt. Hierdurch kann beispielsweise erreichbar sein, dass die dem Fluid zugewandte Kammer einen Schmierstoff, vorzugsweise ein Öl, enthalten kann.

Die dem Fluid zugewandte Kammer kann näher an dem Fluid angeordnet sein als die dem Fluid abgewandte Kammer. Dass die Kammer von der Dichtung und dem Ventilstößel umschlossen wird, kann beispielsweise bedeuten, dass eine geschlossene Kammer gebildet ist, die einerseits durch die Dichtung und andererseits durch den Ventilstößel und/oder das Gehäuseteil gebildet wird.

Bei einer vorteilhaften Ausgestaltung ist vorgesehen, dass die Dichtung mit dem Ventilstößel und dem Gehäuseteil eine einem durch das Ventil schaltbaren Fluid, beispielsweise Wasser, abgewandte Kammer umschließt. Hierdurch kann beispielsweise erreichbar sein, dass die dem Fluid abgewandte Kammer einen Schmierstoff, vorzugsweise ein Fett, enthalten kann.

Bei einer vorteilhaften Ausgestaltung ist vorgesehen, dass die Dichtung als Lippendichtung ausgeführt ist. Hierdurch kann beispielsweise eine optimale Abdichtung zum Ventilstößel erreichbar sein, wobei dieser gleichzeitig leichtgängig beweglich bleibt und die erwünschten Umstellungen zwischen Dusch- und Wannenposition über die gesamte Lebensdauer des Ventils ermöglicht.

Bei einer vorteilhaften Ausgestaltung ist vorgesehen, dass die Dichtung mit zwei Kammern ausgeführt ist. Hierdurch kann beispielsweise erreichbar sein, dass beide Kammern mit Schmierstoffen gleicher oder unterschiedlicher Viskosität befüllt werden können.

Bei einer vorteilhaften Ausgestaltung ist vorgesehen, dass zwischen Dichtung und Ventilstößel mindestens eine Kammer ausgebildet ist. Hierdurch kann beispielweise erreichbar sein, dass, die Kammer als Schmierstoffreservoir dienen kann.

Bei einer vorteilhaften Ausgestaltung ist alternativ oder zusätzlich vorgesehen, dass zwischen Dichtung und Gehäusekammer mindestens eine Kammer ausgebildet ist. Hierdurch kann beispielsweise erreichbar sein, dass die Kammer als Schmierstoffreservoir dienen kann. Auch kann hierdurch beispielsweise erreichbar sein, dass die Kammer von einem anderen Gehäuseteil zugänglich ist.

Bei einer vorteilhaften Ausgestaltung ist vorgesehen, dass eine oder beide Kammern der Dichtung einen Schmierstoff gleicher oder unterschiedlicher Viskosität enthalten. Durch gleiche oder unterschiedliche Viskositäten von Schmierstoffen in einer oder beiden Kammern kann beispielsweise eine verbesserte Schmierung des Ventilstößels erreichbar sein. Beispielsweise kann ein Schmierstoff höherer Viskosität, insbesondere in einer Kammer, genutzt werden, um einen Schmierstoff niedrigerer Viskosität, insbesondere in der jeweils anderen Kammer, einzuschließen. Ein Schmierstoff niedrigerer Viskosität lässt sich auch nutzen, um ein Anhaften eines Schmierstoffs höherer Viskosität an einem beweglichen Teil, beispielsweise dem Ventilstößel, zu verhindern oder zu reduzieren. So lässt sich ein Austrag vermindern.

Bei einer vorteilhaften Ausgestaltung ist vorgesehen, dass die oder eine durch das Ventil schaltbaren Fluid zugewandte Kammer einen Schmierstoff mit einer Viskosität, die höher ist als die Viskosität des Schmierstoffes in der einem durch das Ventil schaltbaren Fluid abgewandten Kammer, enthält. Hierdurch wird beispielsweise erreicht, dass der Schmierstoff in der dem Fluid zugewandten Kammer über einen langen Zeitraum verfügbar bleibt, da ein Auswaschen verhindert wird.

Die Erfindung wird nun anhand von Ausführungsbeispielen näher beschrieben, ist jedoch nicht auf die Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Figur 1: eine Schnittdarstellung durch einen Umsteller,
- Figur 2: eine Detaildarstellung eines Ausschnitts der Figur 1,
- Figur 3: eine Schnittdarstellung durch einen Umsteller,
- Figur 4: eine Schnittdarstellung durch einen Umsteller,
- Figur 5: eine Detaildarstellung eines Ausschnitts der Figur 4,
- Figur 6: eine Schnittdarstellung durch einen Umsteller,
- Figur 7: eine dreidimensionale Darstellung eines Ventilgehäuses,
- Figur 8: eine Detaildarstellung eines Umstellers.

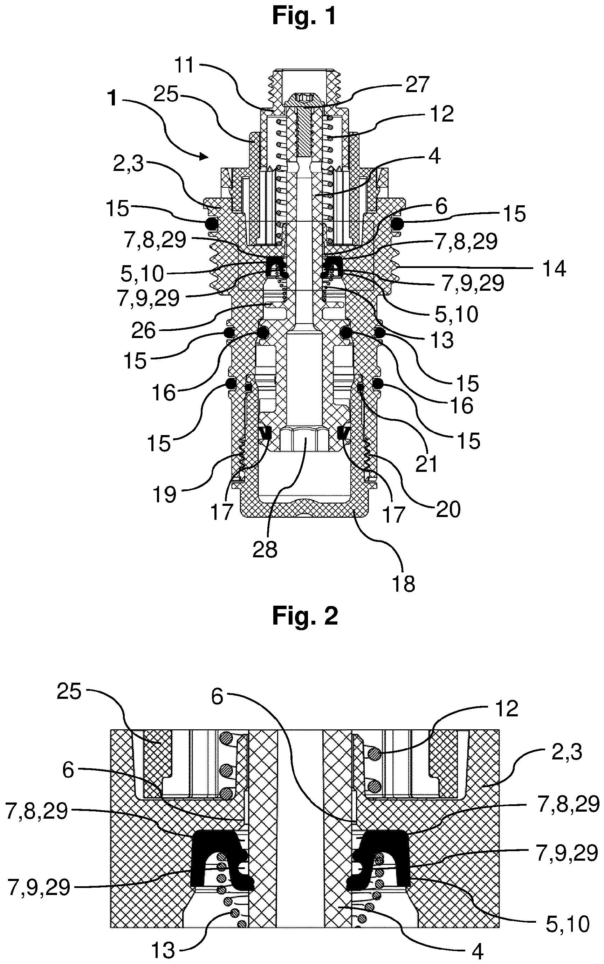

Figur 1 zeigt das erfindungsgemäße Ventil 1 im Umsteller 2. Es umfasst das Ventilgehäuse 3, den Ventilstößel 4 und die Dichtung 5. Die Dichtung 5 wird vom Ventilstößel 4 und vom Gehäuseteil 6 begrenzt und umschließt mit diesen eine Kammer 7. Alternativ ist möglich, dass die Kammer 7 nur von der Dichtung 5 und dem Ventilstößel 4 gebildet wird. Das Ventil in Figur 1 ist mit gezogenem Ventilstößel 4 gezeigt und befindet sich damit in Wannenposition.

In der gezeigten Ausführungsform ist die Dichtung 5 mit zwei Kammern 7 ausgeführt. Eine dem Fluid abgewandte Kammer 8 und eine einem dem Fluid zugewandte Kammer 9. Die dem Fluid zugewandte Kammer 9 wird von der Dichtung 5 und dem Ventilstößel 4 begrenzt. Die dem Fluid abgewandte Kammer 8 wird von der Dichtung 5, dem Ventilstößel 4 und dem Gehäuseteil 6 begrenzt. Das Gehäuseteil 6 ist Teil des Ventilgehäuses 3. Die Dichtung 5 ist in der gezeigten Ausführungsform als Lippendichtung 10 ausgeführt. Die Lippendichtung 10 ist an den Ventilstößel 4 gepresst und dichtet gegen diesen ab. Die dem Fluid abgewandte Kammer 8 und die dem Fluid zugewandte Kammer 9 dienen hierbei als Schmierstoffreservoir 29.

Der Umsteller 2 ist mit gezogener Umstellerachse 11 gezeigt. Die Umstellerachse 11 und mit ihr der Ventilstößel 4 werden durch eine Rückstellfeder 12 im gezogenen Zustand gehalten. Eine Haltefeder 13 die dazu dient die Dichtung 5 in ihrer Position zu halten ist bei gezogener Umstellerachse 11 gestaucht. Zur Befestigung des Umstellers 2 in der Sanitärarmatur hat das Ventilgehäuse 3 ein Außengewinde 14 ausgebildet. Das Ventilgehäuse 3 hat zudem mehrere äußere Dichtringe 15 ausgebildet, die gegenüber der Sanitärarmatur abdichtend wirken. Die Abdichtung innerhalb des Ventils 1, zwischen Ventilgehäuse 3 und Ventilstößel 4, wird über einen inneren Dichtring 16 erreicht. Um unteren Ende des Ventilstößels 4 sitzt eine weitere Lippendichtung 17, die gegenüber einem Topf 18 abdichtet.

Der Topf 18 ist mit einem Außengewinde 19 in einem Innengewinde 20 des Ventilgehäuses 3 befestigt. Ein Dichtring 21 zwischen Topf 18 und Ventilgehäuse 3 dichtet gegen unerwünschten Wasseraustritt ab. Eine Halterung 25, die im Ventilgehäuse 3 befestigt ist dient der Sicherung der Umstellerachse 11 gegen ein Herausrutschen nach oben. Am Ventilstößel 4 sind Flügel 26 ausgebildet, auf die bei einströmendem Wasser ein Wasserdruck herrscht, der den Ventilstößel 4 hierdurch in seiner gewünschten Position hält. Der Ventilstößel 4 ist mit einer Schraube 27 in der Umstellerachse 11 befestigt. Die Schraube 27 wird mittels einem Werkzeugansatz 28 im Ventilstößel 4 befestigt.

Figur 2 zeigt einen Ausschnitt des Umstellers 2 um die Dichtung 5,10 aus Figur 1. Die Lippendichtung 10, die zwei Kammern 8, 9 begrenzt, dichtet zum Ventilstößel 4 ab. Die dem Fluid zugewandte Kammer 9 enthält vorzugsweise ein Öl oder einen Schmierstoff, der eine höhere Viskosität aufweist als ein Schmierstoff in der Kammer 8 die dem Fluid abgewandt ist. Die Kammer 8 wird zudem von dem Gehäuseteil 6 begrenzt und enthält vorzugsweise ein Fett als Schmierstoff.

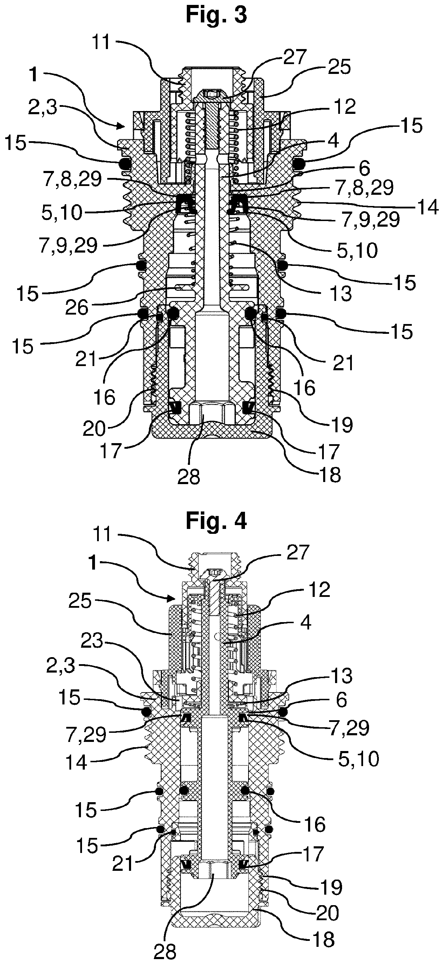

Figur 3 zeigt das Ventil 1 aus Figur 1 in Duschposition. Hierbei ist der Ventilstößel 4, beziehungsweise die Umstellerachse 11 nicht gezogen. Der Ventilstößel 4 liegt am Boden des Topfes 18 auf. Die Haltefeder 13 ist in der Duschposition gestreckt. Die Rückstellfeder 12 hingegen, ist in dieser Position gestaucht. Beim Bewegen des Ventilstößels 4 verbleibt die Dichtung 5, 10 statisch und bewegt sich nicht. Der Ventilstößel 4 bewegt sich gleitend an der Lippendichtung 10 vorbei. Eine über die gesamte Lebensdauer des Ventils 1 vorhandene Schmierung zwischen der Dichtung 5, 10 und dem Ventilstößel 4 ist gewünscht, damit eine stets gleiche Kraft aufgewendet werden muss, um den Ventilstößel 4 zu bewegen.

Figur 4 zeigt eine weitere Ausführungsform des erfindungsgemäßen Ventils 1 mit gezogenem Ventilstößel 4.

Funktionell und/oder konstruktiv zu dem vorangegangenen Ausführungsbeispiel gleichartige oder identische Bauteile und Funktionseinheiten sind mit denselben Bezugszeichen versehen und nicht noch einmal gesondert beschrieben. Die Ausführungen zu den Fig. 1 bis 3 gelten daher zu Fig. 4 entsprechend.

Die Funktionsweise dieser Ausführungsform unterscheidet sich von den Umstellern 2 in den Figuren 1 bis 3. Der hier gezeigte Umsteller 2 fällt nach einem Druckabfall nicht selbstständig in seine Ausgangsposition zurück. Stattdessen muss, wie bei einem Kugelschreiber, die Umstellerachse 11 gedrückt werden, damit Umstellerachse 11 in ihre Ausgangsposition zurückkehrt. Die Dichtung 5 ist hierbei nur mit einer Kammer 7 ausgeführt die von der Dichtung 5, dem Ventilstößel 4 und dem Gehäuseteil 6 begrenzt wird. Diese Kammer 7 enthält vorzugsweise einen Schmierstoff wie Fett. Beim Bewegen den Ventilstößels 4 bewegt sich die Dichtung 5 mit dem Ventilstößel 4 mit. Die Dichtlippe 10 dichtet zwischen Ventilstößel 4 und Ventilgehäuse 3 ab. Ein unerwünschter Wassereintritt wird hiermit verhindert. Im Ventilgehäuse 3 befinden sich Belüftungsöffnungen 22 und Schmierstofftaschen 23. Die Belüftungsöffnungen 22 ermöglichen eine Belüftung des Ventils 1, sodass die Luft, die sich in einer Kammer 24 befindet, der Rückstellbewegung des Ventilstößels 4 nicht entgegenwirkt.

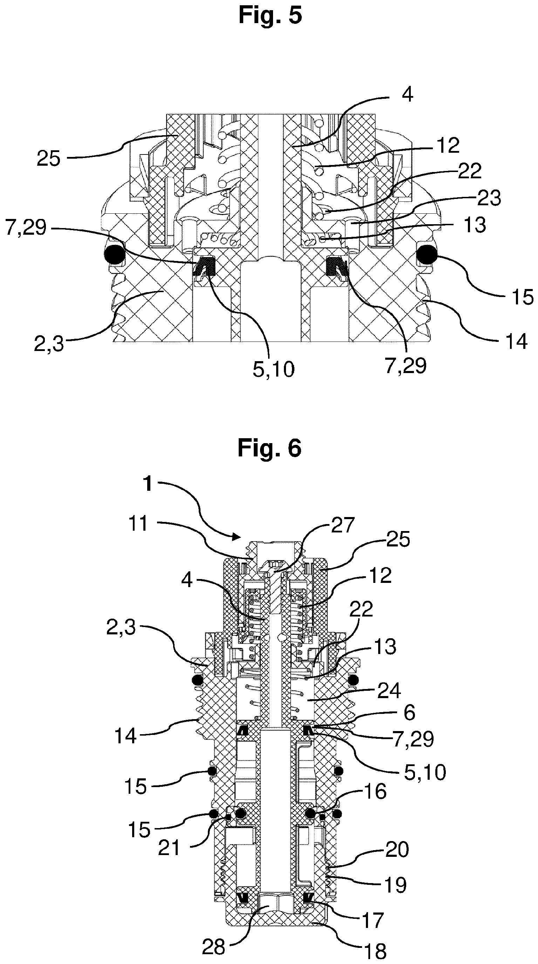

Figur 5 zeigt einen dreidimensionalen Detailausschnitt der Figur 4 in einem Bereich um die Dichtung 5. Die Belüftungsöffnungen 22 und Schmierstofftaschen 23 sind in das Ventilgehäuse 3 eingelassen. An der Unterseite der Schmierstofftaschen 23 kann diese von der Lippendichtung 10 gestreift werden, um neuen Schmierstoff aufzunehmen und diesen in den Bereich der Lippendichtung 10 zu fördern.

Figur 6 zeigt die Kammer 24, die bei nicht gezogenem Ventilstößel ausgebildet ist. Der Umsteller 2 befindet sich in einer ersten Position, beispielsweise in Duschposition. Beim Betätigen des Umstellers 2 bewegt sich die Dichtung 5, 10 mitsamt dem Ventilstößel 4. Die Dichtung 5, 10 umschließt eine Kammer 7 mit einem Gehäuseteil 6 und dem Ventilstößel 4. Die Haltefeder 13 ist gestreckt und hält den Ventilstößel nach unten in seiner gewünschten Position. Das untere Ende des Ventilstößels 3 liegt auf dem Boden des Topfes 18 auf.

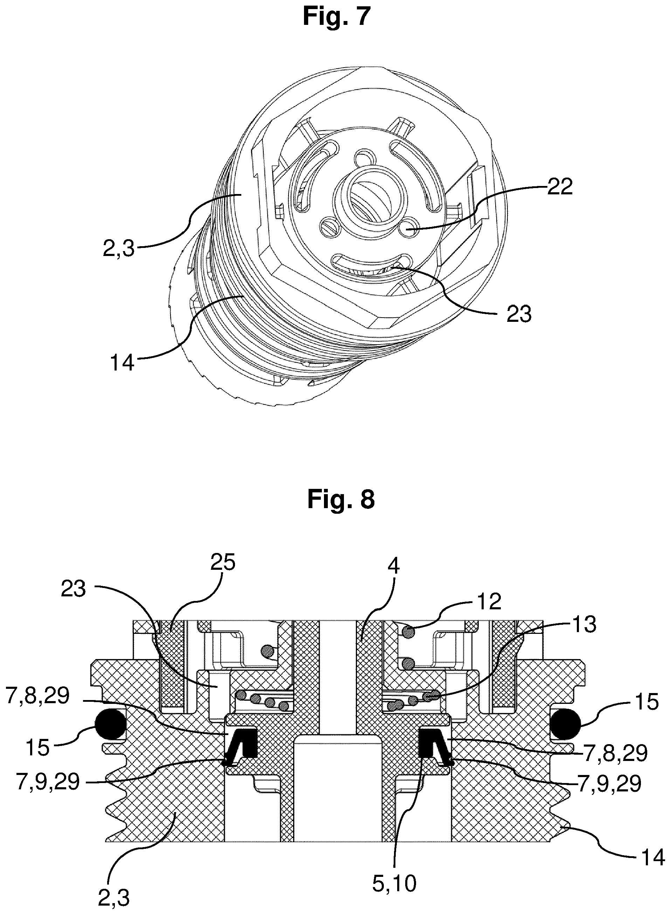

Figur 7 zeigt das Ventilgehäuse 3 in einer dreidimensionalen Ansicht von oben. Die Belüftungsöffnungen 22 und die Schmierstofftaschen 23 sind im Ventilgehäuse 3 eingelassen. Die Belüftungsöffnungen 22 dienen der Be- und Entlüftung der Kammer 24. In die Schmierstofftaschen 23 kann Schmierstoff zur andauernden Versorgung der Lippendichtung 10 mit Schmierstoff eingefüllt werden.

Figur 8 zeigt eine Detaildarstellung einer weiteren Ausführungsform im Bereich der Lippendichtung 10 eines Umstellers 2. Die Lippendichtung 10 ist wie in Figur 1 bis Figur 3 mit zwei Kammern 8, 9 ausgeführt. Die Umstellerachse 11 ist gezogen und der Ventilstößel 4 staucht die Haltefeder 13. Eine Verbindung zwischen Schmierstoffkammer 23 und der dem Fluid abgewandten Kammer 8 ist hergestellt.

Es ist somit ein Ventil 1 offenbart, insbesondere für eine Sanitärarmatur, mit einem Ventilgehäuse 3 mit einem Ventilstößel 4 und einer Dichtung 5, dadurch gekennzeichnet, dass die Dichtung 5 vom Ventilstößel 4 und/oder einem Gehäuseteil 6 begrenzt wird und mit diesem mindestens eine Kammer 7 umschließt.

### Bezugszeichenliste

- 1: Ventil
- 2: Umsteller
- 3: Ventilgehäuse
- 4: Ventilstößel
- 5: Dichtung
- 6: Gehäuseteil
- 7: Kammer
- 8: Fluid abgewandte Kammer
- 9: Fluid zugewandte Kammer
- 10: Lippendichtung
- 11: Umstellerachse
- 12: Rückstellfeder
- 13: Haltefeder
- 14: Außengewinde des Ventilgehäuses
- 15: äußerer Dichtring
- 16: innerer Dichtring
- 17: weitere Lippendichtung
- 18: Topf
- 19: Außengewinde des Wasserauslassgehäuses
- 20: Innengewinde des Ventilgehäuses
- 21: Dichtring zwischen Wasserauslassgehäuse und Ventilgehäuse
- 22: Belüftungsöffnung
- 23: Schmierstofftasche
- 24: Kammer
- 25: Halterung
- 26: Flügel
- 27: Schraube
- 28: Werkzeugansatz
- 29: Schmierstoffreservoir

## Patentansprüche

1. Ventil (1), insbesondere für eine Sanitärarmatur, mit einem Ventilgehäuse (3) mit einem Ventilstößel (4) und einer Dichtung (5), **dadurch gekennzeichnet, dass** die Dichtung (5) vom Ventilstößel (4) und/oder einem Gehäuseteil (6) begrenzt wird und mit diesem mindestens eine Kammer (7) umschließt.

2. Ventil (1) nach dem vorangegangenen Anspruch, **dadurch gekennzeichnet, dass** die Kammer (7) als ein Schmierstoffreservoir (29) ausgebildet ist.

3. Ventil (1) nach einem der vorangegangenen Ansprüche, **dadurch gekennzeichnet, dass** die Dichtung (5) mit Vorspannung an den Ventilstößel (4) gepresst ist, insbesondere dichtend am Ventilstößel (4) anliegt.

4. Ventil (1) nach einem der vorangegangenen Ansprüche, **dadurch gekennzeichnet, dass** die Dichtung (5) mit dem Ventilstößel (4) eine einem durch das Ventil (1) schaltbaren Fluid zugewandte Kammer (9) umschließt.

5. Ventil (1) nach einem der vorangegangenen Ansprüche, **dadurch gekennzeichnet, dass** die Dichtung (5) mit dem Ventilstößel (4) und dem Gehäuseteil (6) eine einem durch das Ventil (1) schaltbaren Fluid abgewandte Kammer (8) umschließt.

6. Ventil (1) nach einem der vorangegangenen Ansprüche, **dadurch gekennzeichnet, dass** die Dichtung (1) als Lippendichtung (10) ausgeführt ist.

7. Ventil (1) nach einem der vorangegangenen Ansprüche, **dadurch gekennzeichnet, dass** die Dichtung (5) mit zwei Kammern (8, 9) ausgeführt ist.

8. Ventil (1) nach einem der vorangegangenen Ansprüche, **dadurch gekennzeichnet, dass** eine oder beide Kammern (7) der Dichtung (5) einen Schmierstoff gleicher oder unterschiedlicher Viskosität enthalten.

9. Ventil (1) nach einem der vorangegangenen Ansprüche, **dadurch gekennzeichnet, dass** die oder eine einem durch das Ventil (1) schaltbaren Fluid zugewandte Kammer (9) einen Schmierstoff mit einer Viskosität, die höher ist als die Viskosität des Schmierstoffes in der einem durch das Ventil (1) schaltbaren Fluid abgewandten Kammer (8), enthält.
